# EUROPÄISCHE PATENTANMELDUNG

(11) **EP 3 851 478 A1**
(43) Veröffentlichungstag der Anmeldung: **21.07.2021**
(21) Anmeldenummer: 20152491.5
(22) Anmeldetag: 17.01.2020
(51) Int. Cl.: C08G 64/30

(54) **VERFAHREN ZUR HERSTELLUNG EINES POLYCARBONATS MIT VERBESSERTER RÜCKGEWINNUNG VON NICHT UMGESETZTEN DIARYLCARBONAT**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Gegenstand der vorliegenden Erfindung ist ein Verfahren zur Herstellung eines Polycarbonats aus einem Diphenol und einem Diarylcarbonat nach dem Schmelzeumesterungsverfahren. Dabei wird das Diarylcarbonat durch Umsetzung von einem Monophenol mit einem Carbonylhalogenid erhalten. Das erfindungsgemäße Verfahren zeichnet sich dadurch aus, dass ein gegenüber dem Stand der Technik erhöhter Anteil des nicht bei der Reaktion mit dem Diphenol umgesetzten Diarylcarbonats rückgewonnen und wieder dem Verfahren zugeführt wird und somit ein gegenüber dem Stand der Technik verringerter Anteil des nicht bei der Reaktion mit dem Diphenol umgesetzten Diarylcarbonats der Entsorgung zugeführt wird.

## Beschreibung

Gegenstand der vorliegenden Erfindung ist ein Verfahren zur Herstellung eines Polycarbonats aus einem Diphenol und einem Diarylcarbonat nach dem Schmelzeumesterungsverfahren. Dabei wird das Diarylcarbonat durch Umsetzung von einem Monophenol mit einem Carbonylhalogenid erhalten. Das erfindungsgemäße Verfahren zeichnet sich dadurch aus, dass ein gegenüber dem Stand der Technik erhöhter Anteil des nicht bei der Reaktion mit dem Diphenol umgesetzten Diarylcarbonats rückgewonnen und wieder dem Verfahren zugeführt wird und somit ein gegenüber dem Stand der Technik verringerter Anteil des nicht bei der Reaktion mit dem Diphenol umgesetzten Diarylcarbonats der Entsorgung zugeführt wird.

Sowohl Polycarbonate als auch deren Herstellung nach dem Schmelzeumesterungsverfahren sind aus dem Stand der Technik bekannt.

Bei der Herstellung von Polycarbonat durch Schmelzeumesterung werden Dihydroxyarylverbindungen mit Diarylcarbonaten zur Reaktion gebracht, wobei im Sinne einer Umesterungsreaktion eine Monohydroxyarylverbindung aus den Diarylcarbonaten abgespalten wird. Die Aufkondensation führt zunächst zur Bildung niedermolekularer Polycarbonat-Oligomere, die unter fortgesetzter Abspaltung der Monohydroxyarylverbindung zu hochmolekularem Polycarbonat weiterreagieren. Der Reaktionsfortschritt kann durch den Einsatz geeigneter Katalysatoren gefördert werden.

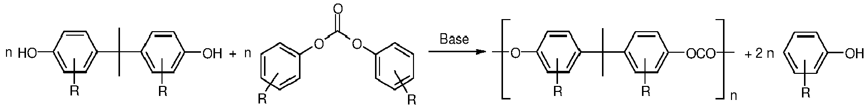

Die Herstellung aromatischer Polycarbonate nach dem Schmelzumesterungsverfahren ist bekannt und beispielsweise beschrieben in "Schnell", Chemistry and Physics of Polycarbonates, Polymer Reviews, Vol. 9, Interscience Publishers, New York, London, Sydney 1964, in D.C. Prevorsek, B.T. Debona and Y. Kersten, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), in D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich in Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299.

Technisch sehr bedeutsam ist die Herstellung von hochmolekularem Polycarbonat aus 2,2-Bis(4-hydroxyphenyl)-propan (kurz auch Bisphenol A oder BPA genannt) und Diphenylcarbonat (kurz auch DPC genannt).

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Polycarbonate im Sinne der vorliegenden Erfindung sind auch Mischungen von unterschiedlichen Polycarbonaten.

Die thermoplastischen Polycarbonate einschließlich der thermoplastischen, aromatischen Polyestercarbonate haben mittlere Molekulargewichte M_{w} (ermittelt durch Messung der relativen Lösungsviskosität bei 25°C in CH₂Cl₂ und einer Konzentration von 0,5 g pro 100 ml CH₂Cl₂) von 20.000 g/mol bis 32.000 g/mol, vorzugsweise von 23.000 g/mol bis 31.000 g/mol, insbesondere von 24.000 g/mol bis 31.000 g/mol.

Ein Teil, bis zu 80 Mol-%, vorzugsweise von 20 Mol-% bis zu 50 Mol-%, der CarbonatGruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (I)

HO-Z-OH (I),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (II) für einen Rest der Formel (II) 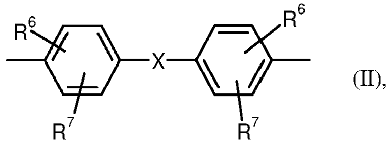 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (IIa)

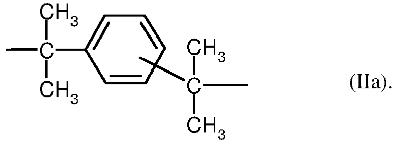

Beispiele für Diphenole (Dihydroxyarylverbindungen) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]-benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexan und 1,1-Bis-(4-hydroxyphenyl)-3,3,5-trimethylcyclohexan (Bisphenol TMC (BPTMC)), sowie die Diphenole der Formeln (III) bis (V) 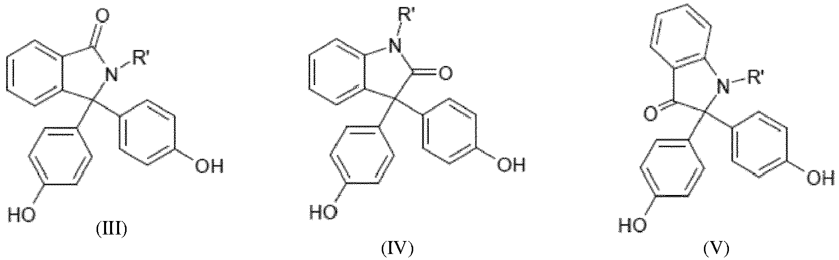 in denen R' jeweils für C₁-C₄-Alkyl, Aralkyl oder Aryl, bevorzugt für Methyl oder Phenyl steht.

Besonders bevorzugte Diphenole sind 4,4'-Dihydroxydiphenyl, 1,1-Bis-(4-Hydroxyphenyl)-phenylethan, 2,2-Bis-(4-hydroxyphenyl)-propan (Bisphenol A (BPA)), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC (BPTMC)) und die Dihydroxyverbindungen der Formeln (III), (IV) und (V), in denen R' jeweils für C₁-C₄-Alkyl, Aralkyl oder Aryl, bevorzugt für Methyl oder Phenyl steht.

Diese und weitere geeignete Diphenole sind z.B. in US 2 999 835 A, US 3 148 172 A, US 2 991 273 A, US 3 271 367 A, US 4 982 014 A und US 2 999 846 A, in den deutschen Offenlegungsschriften DE 1 570 703 A, DE 2 063 050 A, DE 2 036 052 A, DE 2 211 956 A und DE 3 832 396 A, der französischen Patentschrift FR 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

In der gleichen Weise werden eventuell zu verwendende Verzweiger oder Verzweigermischungen der Synthese zugesetzt. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen, wobei die Verzweiger mit den Diphenolen vorgelegt werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Diarylcarbonate, die zur Herstellung von Polycarbonaten nach dem Schmelzeumesterungsverfahren eingesetzt werden können, sind Di-C₆-C₁₄-Arylester, vorzugsweise die Diester von Phenol oder substituierten Phenolen, also Diphenylcarbonat oder z.B. Bissalicylcarbonat. Bezogen auf 1 Mol Diphenol werden die Diarylcarbonate in 1,01 bis 1,30 Mol, bevorzugt in 1,02 bis 1,15 Mol eingesetzt.

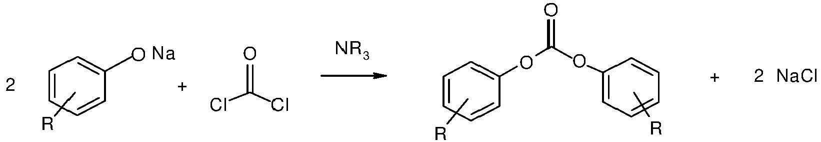

Das ausreagierte, höchstens noch Spuren an (< 2 ppm) Chlorkohlensäurearylestern enthaltende mindestens zweiphasige Reaktionsgemisch lässt man zur Phasentrennung absitzen. Die wässrige alkalische Phase (Reaktionsabwasser) wird abgetrennt und die organische Phase mit verdünnter Salzsäure und Wasser extrahiert. Die vereinigten Wasserphasen werden der Abwasseraufarbeitung zugeführt, wo Lösungsmittel- und Katalysatoranteile durch Strippen oder Extraktion abgetrennt und rückgeführt werden. Anschließend können nach der Einstellung eines bestimmten pH-Wertes von z.B. 6 bis 8, z.B. durch Salzsäurezugabe, die gegebenenfalls noch verbleibenden organischen Verunreinigungen wie z.B. Monophenol durch Behandlung mit Aktivkohle entfernt und die Wasserphasen der Chloralkalielektrolyse zugeführt werden.

In einer anderen Variante der Aufarbeitung wird das Reaktionsabwasser nicht mit den Waschphasen vereinigt, aber nach Strippen oder Extraktion zur Abtrennung von Lösungsmitteln und Katalysatorresten, auf einem bestimmten pH-Wert von z.B. 6 bis 8, z.B. durch Salzsäurezugabe eingestellt und nach Abtrennung der noch verbleibenden organischen Verunreinigungen wie z.B. Monophenol durch Behandlung mit Aktivkohle der Chloralkalielektrolyse zugeführt.

Die Waschphasen können nach Entfernung der Lösungsmittel- und Katalysatoranteile durch Strippen oder Extraktion gegebenenfalls wieder der Synthese zugeführt werden.

Ein Verfahren zur Herstellung von Diarylcarbonat und Verarbeitung mindestens eines Teils der dabei anfallenden Alkalchlorid-haltigen Lösung in einer nachgeschalteten Alkalichlorid-Elektrolyse offenbart beispielsweise die WO2009071211A1.

Die Herstellung der Diarylcarbonate erfolgt gemäß dem Stand der Technik.

In einem Schritt (A) wird dazu ein Monophenol in Gegenwart eines Alkalihydroxids in einer wässrigen Phase gelöst und ein Carbonylhalogenid in einem organischen Lösungsmittel gelöst.

In einem Schritt (B) erfolgt dann in einem Phasengrenzflächenverfahren die Umsetzung des Monophenols mit dem Carbonylhalogenid unter Bildung eines in dem organischen Lösungsmittel gelösten Diarylcarbonats und eines Alkalihalogenids. Das Carbonylhalogenid kann ein dabei ein Carbonyldihalogenid, vorzugsweise Phosgen, oder Disphosgen oder Triphosgen sein; insbesondere ist Phosgen bevorzugt. Das Alkalihydroxid ist bevorzugt Natriumhydroxid und das Alkalihalogenid ist bevorzugt NaCl. Als Diarylcarbonat bevorzugt ist Diphenylcarbonat. Optimierungen des Verfahrens durch Verbesserung der Durchmischung und Einhaltung eines engen Temperatur- und pH-Profils als auch Isolierung des Diarylcarbonates werden in EP 1 219 589 A1, EP 1 216 981 A2, EP 1 216 982 A2 und EP 784 048 A1 beschrieben.

Besonders geeignete Monophenole zur Herstellung der Diarylcarbonate in Schritt c) sind Phenole der Formel (VI) 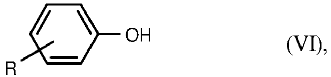 worin
- R: Wasserstoff, Halogen oder ein verzweigter oder unverzweigter C₁- bis C₉-Alkylrest oder Alkoxycarbonylrest ist.

Bevorzugt sind also Phenol, Alkylphenole wie Kresole, p-tert.-Butylphenol, p-Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol oder Salicylsäure-methylester. Besonders bevorzugt ist Phenol.

Das eingesetzte Alkali zur Bildung des Phenolats kann eine Alkalilauge mit Hydroxiden aus der Reihe: Na-, K-, Li-Hydroxid sein, bevorzugt ist Natronlauge, und wird im neuen Verfahren vorzugsweise als 10 bis 55 Gew.%-ige Lösung eingesetzt.

Die Herstellung der Diarylcarbonate kann durch Katalysatoren, wie tertiäre Amine, N-Alkylpiperidine oder Oniumsalze beschleunigt werden. Bevorzugt werden Tributylamin, Triethylamin und N-Ethylpiperidin verwendet.

Der eingesetzte Amin-Katalysator kann offenkettig oder zyklisch sein, besonders bevorzugt sind Triethylamin und N-Ethylpiperidin. Der Katalysator wird vorzugsweise als 1 bis 55 Gew.%-ige Lösung eingesetzt.

Unter Oniumsalzen werden hier Verbindungen wie NR₄X verstanden, wobei R ein Alkyl und/oder Arylrest und/oder ein H sein kann und X ein Anion ist.

Das Carbonylhalogenid, insbesondere Phosgen, kann flüssig, gasförmig oder gelöst in einem inerten Lösungsmittel eingesetzt werden.

Gemäß dem Stand der Technik vorzugsweise verwendbare inerte Lösungsmittel für die Herstellung von Diarylcarbonaten, insbesondere für die Herstellung von Diphenylcarbonat, die für die Herstellung von Polycarbonaten verwendet werden können, sind Lösungsmittel auf der Grundlage von Toluol oder von Chlorkohlenwasserstoffen wie beispielsweise Dichlormethan, den verschiedenen Dichlorethanen oder Chlorpropanverbindungen, Chlorbenzol oder Chlortoluol, oder Gemischen aus zwei oder mehr dieser Chlorkohlenwasserstoffe und Toluol. Vorzugsweise wird ein inertes Lösungsmittel auf der Grundlage von Dichlormethan oder einem Gemisch aus Dichlormethan und Chlorbenzol eingesetzt. Im Rahmen der vorliegenden Erfindung werden solche inerten Lösungsmittel oder Gemische von inerten Lösungsmitteln zusammenfassend in der Einzahl "organisches Lösungsmittel" und in der Mehrzahl "organische Lösungsmittel" genannt.

Neben dem erhaltenen gewünschten Diarylcarbonat enthält das in Schritt (B) erhaltene Reaktionsgemisch, das bei der Umsetzung eines Monophenols mit einem Carbonylhalogenid in einem organischem Lösungsmittel erhalten wird, im Wesentlichen noch nicht umgesetztes Monophenol, organisches Lösungsmittel, Verunreinigungen, Alkalihalogenid und Wasser. Die Verunreinigungen können sowohl aus den eingesetzten Reaktanten und Lösungsmitteln stammen als auch bei der Umsetzung der Reaktanten zum Diarylcarbonat gebildet werden; einem Fachmann sind solche Verunreinigungen sowohl der Art als auch der Menge nach bekannt, beispielsweise aus der EP1234845A2. Weitere mögliche Verunreinigungen sind beispielsweise Chlorameisensaeurephenylester, Phenylpiperidylurethan, chloriertes Diphenylcarbonat oder Cresylphenylcarbonat. Das Alkalihalogenid wird wie bereits weiter oben erklärt mit der wässrigen Phase abgetrennt und gegebenenfalls weiterverarbeitet.

In einem Schritt (C) erfolgt nun ein mehrstufiges Abtrennen sowohl des organischen Lösungsmittels, als auch des nicht umgesetzten Monophenols als auch eines größeren Teils der Verunreinigungen aus Schritt (B) von einem größeren Teil des Diarylcarbonats und von einem kleineren Teil der Verunreinigungen aus Schritt (B), wobei dieser größere Teil des Diarylcarbonats den kleineren Teil der Verunreinigungen aus Schritt (B) enthält, und Rückführung sowohl des organischen Lösungsmittels als auch eines größeren Teils des nicht umgesetzten Monophenols zu Schritt (A). Dabei enthält der abgetrennte größere Teil der Verunreinigung aus Schritt (B) einen kleineren Teil des Diarylcarbonats und einen kleineren Teil des nicht umgesetzten Monophenols. Dieser abgetrennte größere Teil der Verunreinigung aus Schritt (B) wird einem Schritt (E) zugeführt. Der größere Teil des Diarylcarbonats enthaltend den kleinere Teil der Verunreinigungen aus Schritt (B) werden Schritt (D) zugeführt.

In einem Schritt (D) wird nun der größere Teil des erhaltenen Diarylcarbonats enthaltend den kleineren Teil der Verunreinigungen aus Schritt (B) mit einem Diphenol oder mehreren Diphenolen zu einem Oligocarbonat und einem Monophenol umgesetzt, wobei das Oligocarbonat dann zu einem Polycarbonat weiter verarbeitet wird. Dazu wird das erhaltene Polycarbonat vom in Schritt (D) entstandenen Monophenol, von nicht umgesetztem Diarylcarbonat, von nicht umgesetztem Oligocarbonat und von bei der Umsetzung des Diarylcarbonats zum Oligocarbonat und weiter zum Polycarbonat in diesem Schritt (D) entstandenen Verunreinigungen abgetrennt und anschließend weiter aufgereinigt, um das Polycarbonat als Endprodukt zu erhalten. Auch die hier genannten Verunreinigungen sind einem Fachmann sowohl der Art als auch der Menge nach bekannt, beispielsweise aus der EP1612231A1. Ein größerer Teil des in diesem Schritt (D) gebildeten Monophenols wird wieder Schritt (A) zugeführt. Ein größerer Teil des in diesem Schritt (D) nicht umgesetzten Diarylcarbonats wird abgetrennt und wieder Schritt (C) zugeführt. Der kleinere Teil des nicht umgesetzten Diarylcarbonats, das nicht umgesetzte Oligocarbonat, der kleinere Teil der Verunreinigungen aus Schritt (B) und die in diesem Schritt (D) entstandenen Verunreinigungen werden Schritt (E) zugeführt.

In einem Schritt (E) werden der in Schritt (B) erhaltene abgetrennte größere Teil der Verunreinigung enthaltend einen kleineren Teil des Diarylcarbonats aus Schritt (B) und einen kleineren Teil des nicht umgesetzten Monophenols aus Schritt (B), der in Schritt (D) kleinere Teil des abgetrennten, nicht umgesetzten Diarylcarbonats, das in Schritt (D) nicht umgesetzte Oligocarbonat und die in Schritt (D) bei der Umsetzung des Diarylcarbonats zum Oligocarbonat und weiter zum Polycarbonat entstandenen Verunreinigungen enthaltend einen kleineren Teil des Monophenols aus Schritt (D) vereinigt und einer Resteentsorgung, beispielsweise einer Verbrennung zugeführt.

Dabei beträgt der Anteil an Diarylcarbonat, der einer Resteentsorgung zugeführt wird, mehr als 0,5 % bis sogar über 1 % des in Schritt (A) gebildeten Diarylcarbonats.

Ein solch großer Anteil Diarylcarbonat, der einer Resteentsorgung zugeführt wird, ist sowohl aus Gründen der Wirtschaftlichkeit des Verfahrens als auch aus Gründen des Umweltschutzes unerwünscht.

Aufgabe der vorliegenden Erfindung ist es daher, ein verbessertes Verfahren zur Herstellung eines Polycarbonats aus einem Diphenol und einem Diarylcarbonat nach dem Schmelzeumesterungsverfahren zur Verfügung zu stellen, bei dem der auf die Menge des in Schritt (A) gebildeten Diarylcarbonats bezogene Anteil an Diarylcarbonat, der einer Resteentsorgung zugeführt wird, geringer ist als bei Verfahren nach dem Stand der Technik. Das verbesserte Verfahren soll hinsichtlich seiner Wirtschaftlichkeit und hinsichtlich des Umweltschutzes dem Verfahren gemäß dem Stand der Technik überlegen sein.

Gelöst wird die Aufgabe durch ein Verfahren mit den Merkmalen des Hauptanspruchs. Insbesondere wird die Aufgabe gelöst durch ein Verfahren zur Herstellung eines Polycarbonats nach dem Schmelzumesterungsverfahren in Gegenwart von Katalysatoren, wobei das Verfahren wenigstens folgende Schritte umfasst:
Verfahren zur Herstellung eines Polycarbonats nach dem Schmelzumesterungsverfahren in Gegenwart von Katalysatoren, wobei das Verfahren wenigstens folgende Schritte umfasst:
(a) Lösen eines Monophenols in einer wässrigen ein Alkalihydroxid enthaltenden Phase und Lösen eines Carbonylhalogenids in einem organischen Lösungsmittel,
(b) Umsetzung des in der wässrigen alkalischen Phase gelösten Monophenols mit dem in dem organischen Lösungsmittel gelösten Carbonylhalogenid zu einem in dem organischen Lösungsmittel gelösten Diarylcarbonat unter Bildung von Verunreinigungen aus Schritt (b) (diese Verunreinigungen aus Schritt (b) werden nachfolgend auch "Schritt-(b)-Verunreinigungen" genannt), wobei ein Alkalihalogenid gebildet und anschließend mit der wässrigen Phase abgetrennt wird,
(c) mehrstufiges Abtrennen sowohl des organischen Lösungsmittels, als auch nicht umgesetzten Monophenols als auch eines größeren Teils der Schritt-(b)-Verunreinigungen von einem größeren Teil des Diarylcarbonats und von einem kleineren Teil der Schritt-(b)-Verunreinigungen und gemeinsames Zuführung diesen größeren Teils des Diarylcarbonats und dieses kleineren Teil der Schritt-(b)-Verunreinigungen zu Schritt (d), Rückführung des organischen Lösungsmittels zu Schritt (a) und Rückführung eines größeren Teils des nicht umgesetzten Monophenols zu Schritt (a), wobei der abgetrennte größere Teil der Schritt-(b)-Verunreinigung einen kleineren Teil des Diarylcarbonats und einen kleineren Teil des nicht umgesetzten Monophenols enthält, und Zuführen des größeren Teil der Schritt-(b)-Verunreinigungen zu Schritt (e);
(d) Umsetzung des größeren Teils des Diarylcarbonats aus Schritt (c) mit einem Diphenol oder mehreren Diphenolen zu einem Oligocarbonat und einem Monophenol unter Bildung von Verunreinigungen aus Schritt (d) (diese Verunreinigungen aus Schritt (d) werden nachfolgend auch "Schritt-(d)-Verunreinigungen" genannt), und Weiterverarbeitung des Oligocarbonats zu einem Polycarbonat, Abtrennung des Polycarbonats von Monophenol aus Schritt (d), von nicht umgesetztem Diarylcarbonat, von nicht umgesetztem Oligocarbonat, von dem kleineren Teil der Schritt-(b)-Verunreinigungen und von Schritt-(d)-Verunreinigungen, die einen kleineren Teil des in Schritt (d) gebildeten Monophenols enthalten, und Aufreinigung des abgetrennten Polycarbonats als Endprodukt, sowie Rückführung eines größeren Teils des in Schritt (d) gebildeten Monophenols zu Schritt (a), Abtrennung und Rückführung eines größeren Teils des in Schritt (d) nicht umgesetzten Diarylcarbonats zu Schritt (c) und Zuführen des kleineren Teil des nicht umgesetzten Diarylcarbonats, des nicht umgesetztem Oligocarbonats, des kleineren Teils der Schritt-(b)-Verunreinigungen und der Schritt-(d)-Verunreinigungen enthaltend einen kleineren Teils des in Schritt (d) gebildeten Monophenols zu Schritt (e),
(e) Vereinigung des in Schritt (c) abgetrennten größeren Teils der Schritt-(b)-Verunreinigungen und des darin enthaltenen kleineren Teils des Diarylcarbonats und des darin enthaltenen kleineren Teils des nicht umgesetzten Monophenols, des kleineren Teils des in Schritt (d) nicht umgesetzten Diarylcarbonats, des in Schritt (d) nicht umgesetzten Oligocarbonats, des kleineren Teil der Schritt-(b)-Verunreinigungen und der Schritt-(d)-Verunreinigungen enthaltend einen kleineren Teils des in Schritt (d) gebildeten Monophenols zu einem hier sogenannten Unrein-Gemisch und Zuführung dieses Unrein-Gemischs zu einer Reinigungskolonne in Schritt (f),
(f) wobei in dieser Reinigungskolonne das Unrein-Gemisch derart aufgetrennt wird, dass aus dem Sumpf dieser Reinigungskolonne ein Strom eines hier sogenannten Reste-Gemischs enthaltend einen kleineren Teil des der Reinigungskolonne zugeführten Diarylcarbonats und einen ersten Teil der der Reinigungskolonne aus Schritt (e) zugeführten Schritt-(b)-Verunreinigungen, enthaltend einen kleineren Teils des nicht umgesetzten Monophenols, und Schritt-(d)-Verunreinigungen enthaltend einen kleineren Teils des in Schritt (d) gebildeten Monophenols, und einen ersten Teil des der Reinigungskolonne aus Schritt (e) zugeführten, nicht umgesetzten Oligocarbonats abgeführt wird
   und ein größerer Teil dieses Reste-Gemischs wieder der Reinigungskolonne als Seitenstrom zugeführt wird und ein kleinerer Teil dieses Reste-Gemischs einer Entsorgung zugeführt wird, und
   wobei aus dem Kopf dieser Reinigungskolonne ein Strom eines hier sogenannten Rein-Gemischs enthaltend einen größeren Teil des der Reinigungskolonne zugeführten Diarylcarbonats und enthaltend einen zweiten Teil der der Reinigungskolonne aus Schritt (e) zugeführten Schritt-(b)-Verunreinigungen, enthaltend einen kleineren Teils des nicht umgesetzten Monophenols, und Schritt-(d)-Verunreinigungen enthaltend einen kleineren Teils des in Schritt (d) gebildeten Monophenols, und enthaltend einen zweiten Teil des der Reinigungskolonne aus Schritt (e) zugeführten, nicht umgesetzten Oligocarbonats abgeführt und dieses Rein-Gemisch einem Kühler zugeführt wird und anschließend von diesem Kühler ein größer Teil dieses Rein-Gemischs wieder zum Kopf der Reinigungskolonne zurück geführt wird ein und ein kleinerer Teil dieses Rein-Gemischs
(g) entweder
   (i) wieder Schritt (c) zugeführt wird,
      oder
   (ii) mindestens einer weiteren Kolonne zugeführt wird, wobei dieser kleinere Teil des Rein-Gemischs in ein Gemisch enthaltend einen höheren Anteil an Diphenylcarbonat als das Rein-Gemisch und mindestens ein Gemisch enthaltend einen geringeren Anteil an Diphenylcarbonat als das Rein-Gemisch aufgetrennt wird, und das Gemisch enthaltend einen höheren Anteil an Diphenylcarbonat als das Rein-Gemisch wieder Schritt (c) zugeführt wird und das mindestens eine Gemisch enthaltend einen geringeren Anteil an Diphenylcarbonat als das Rein-Gemisch - ggf. nach mindestens einer weiteren Reinigung - wieder Schritt (f) zugeführt wird.

Die Schritte (a) bis (e) des erfindungsgemäßen Verfahrens sind dabei von den Schritten (A) bis (E) des oben dargestellten Verfahrens gemäß des Stands der Technik umfasst, mit dem Unterschied, dass das in Schritt (E) entstandene Gemisch einer Resteentsorgung zugeführt wird, während in Schritt (e) das Unrein-Gemischs zu einer Reinigungskolonne in Schritt (f) geführt wird. Dabei ist ein Schritt des erfindungsgemäßen Verfahrens mit einem bestimmten Kleinbuchstaben von einem Schritt des Verfahrens gemäß des Stands der Technik mit dem entsprechenden Großbuchstaben umfasst. Wenn im Rahmen der vorliegenden Beschreibung bezogen auf einen Stoff von einem "größeren Teil" oder einem "kleineren Teil" die Rede ist, so ergeben dieser "größere Teil" und dieser "kleinere Teil" immer 100 % der Stoffmenge dieses Stoffes. Der "größere Teil" eines Stoffes ist damit mehr als 50 % der Stoffmenge dieses Stoffes, der kleinere Teil folglich weniger als 50 % der Stoffmenge dieses Stoffes. Wenn im Rahmen der vorliegenden Beschreibung bezogen auf einen Stoff von einem "ersten Teil" oder einem "zweiten Teil" die Rede ist, so ergeben dieser "erste Teil" und dieser "zweite Teil" immer 100 % der Stoffmenge dieses Stoffes. Der "erste Teil" eines Stoffes und der "zweite Teil" können gleich groß oder unterschiedlich groß sein, wobei es möglich ist, dass der "erste Teil" eines Stoffes der größere Teil sein kann und der "zweite Teil" dann der kleinere Teil, oder alternativ der "erste Teil" eines Stoffes der kleinere Teil sein kann und der "zweite Teil" dann der größere Teil.

Überraschend wurde festgestellt, dass der Anteil an Diarylcarbonat, der einer Resteentsorgung zugeführt wird, in der Variante (i) nur noch 0,1 % bis maximal, bevorzugt weniger als, 0,5 %, besonders bevorzugt bis maximal 0,3 %, ganz besonders bevorzugt bis maximal 0,2 %, des in Schritt (B) gebildeten Diarylcarbonats beträgt und in der Variante (ii) sogar nur noch 0,01 % bis maximal 0,1 % des in Schritt (B) gebildeten Diarylcarbonats beträgt.

Somit löst das erfindungsgemäße Verfahren die Aufgabe, ein verbessertes Verfahren zur Herstellung eines Polycarbonats aus einem Diphenol und einem Diarylcarbonat nach dem Schmelzeumesterungsverfahren zur Verfügung zu stellen, bei dem der auf die Menge des in Schritt (A) gebildeten Diarylcarbonats bezogene Anteil an Diarylcarbonat, der einer Resteentsorgung zugeführt wird, geringer ist als bei Verfahren nach dem Stand der Technik.

Der höhere apparative und energetische Aufwand, der zur Verwirklichung und Durchführung der erfindungsgemäßen Schritte (f) und (g) nötig ist, wird dabei durch die energetische und stoffliche Ersparnis, die durch den verringerten Verlust an Diarylcarbonat bewirkt wird, nicht nur ausgeglichen, sondern auch bei weitem übertroffen. Damit ist das erfindungsgemäße Verfahren hinsichtlich seiner Wirtschaftlichkeit und hinsichtlich des Umweltschutzes dem Verfahren gemäß dem Stand der Technik überlegen.

In einer bevorzugten Variante des erfindungsgemäßen Verfahrens beträgt in Schritt (f) die Sumpftemperatur 240 bis 300 °C, bevorzugt 260 bis 280 °C.

In einer weiteren bevorzugten Variante des erfindungsgemäßen Verfahrens beträgt in Schritt (f) die der Druck im Kopf 10 bis 30 mbara (bar absolut), bevorzugt 15 bis 25 mbara.

Der größere Teil des Rein-Gemischs, der in Schritt (f) wieder zum Kopf der Reinigungskolonne zurück geführt wird, beträgt 51 bis 80 %, und der kleinere Teil dieses Rein-Gemischs, der Schritt (g) zugeführt wird, beträgt 49 bis 20 %.

Die genannten Temperaturen und Drücke sind nötig, damit einerseits das in Schritt (f) in der Reinigungskolonne erzeugte Reste-Gemisch nicht die Reinigungskolonne verstopft und andererseits die Auftrennung des Unrein-Gemischs in ein Reste-Gemisch und ein Rein-Gemisch möglich ist, ohne dass die in diesen Gemischen befindlichen Stoffe zersetzt werden oder diese Stoffe Nebenreaktionen eingehen.

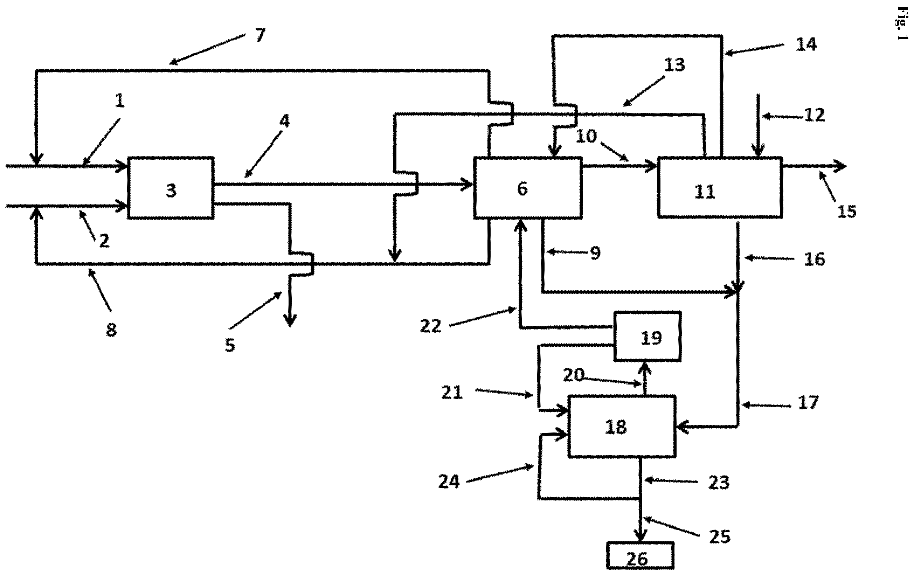

Die Erfindung kann an dem in Figur 1 dargestellten Diagramm erläutert werden, ohne dass die Erfindung darauf eingeschränkt werden soll:
- 1: Strom eines in einem organischen Lösungsmittel gelösten Carbonylhalogenids;
- 2: Strom eines Monophenols, das in einer ein Alkalihydroxid enthaltenden wässrigen Phase gelöst ist;
- 3: Vorrichtung zur Umsetzung des in der wässrigen alkalischen Phase gelösten Monophenols mit dem in dem organischen Lösungsmittel gelösten Carbonylhalogenid zu einem in dem organischen Lösungsmittel gelösten Diarylcarbonat;
- 4: Strom von Diarylcarbonat, Verunreinigungen, organischem Lösungsmittel und nicht umgesetztem Monophenol;
- 5: Strom von Alkalichlorid in wässriger Phase,
- 6: Vorrichtung, in der organisches Lösungsmittel, ein größerer Teil des nicht umgesetzten Monophenols, ein größerer Teil des Diphenylcarbonats enthaltend einen kleineren Teil der Verunreinigungen und ein größerer Teil der Verunreinigungen enthaltend einen kleineren Teil des Diarylcarbonats und einen kleineren Teil des nicht umgesetzten Monophenols voneinander getrennt werden;
- 7: Strom des organischen Lösungsmittels;
- 8: Strom des größeren Teils des nicht umgesetzten Monophenols;
- 9: Strom des größeren Teils der Verunreinigungen enthaltend einen kleineren Teil des Diarylcarbonats und einen kleineren Teil des nicht umgesetzten Monophenols;
- 10: Strom des größeren Teils des Diarylcarbonats enthaltend einen kleineren Teil der Verunreinigungen;
- 11: Vorrichtung zur Umsetzung eines Diarylcarbonats mit einem Diphenol zu einem Oligocarbonat und weiter zu einem Polycarbonat;
- 12: Strom eines Diphenols;
- 13: Strom des größeren Teils des Monophenols, das bei der Umsetzung des Diarylcarbonats mit einem Diphenol zu einem Oligocarbonat und weiter zu einem Polycarbonat entstanden ist;
- 14: Strom des größeren Teils des bei der Umsetzung des Diarylcarbonats mit einem Diphenol zu einem Oligocarbonat und weiter zu einem Polycarbonat nicht umgesetzten Diarylcarbonats;
- 15: Strom des Polycarbonats als Endprodukt;
- 16: Strom von nicht umgesetztem Diarylcarbonat, nicht umgesetztem Oligocarbonat, des kleineren Teils des Monophenols, das bei der Umsetzung des Diarylcarbonats mit einem Diphenyl zu einem Oligocarbonat und weiter zu einem Polycarbonat entstanden ist, und der Verunreinigungen aus Strom (10);
- 17: Strom, entstanden aus der Vereinigung der Ströme (9) und (16);
- 18: Reinigungskolonne;
- 19: Kühler;
- 20: Strom des Rein-Gemischs;
- 21: Strom des größeren Teils des Rein-Gemischs;
- 22: Strom des kleineren Teils des Rein-Gemischs;
- 23: Strom des Reste-Gemischs;
- 24: Strom des größeren Teils des Reste-Gemischs;
- 25: Strom des kleineren Teils des Reste-Gemischs;
- 26: Vorrichtung zur Entsorgung.

Die Vorrichtungen (3), (6), (11), (118), (19) und (26) können unabhängig voneinander jeweils aus einer Einzel vorrichtung oder mehreren miteinander verbundenen Vorrichtungen bestehen.

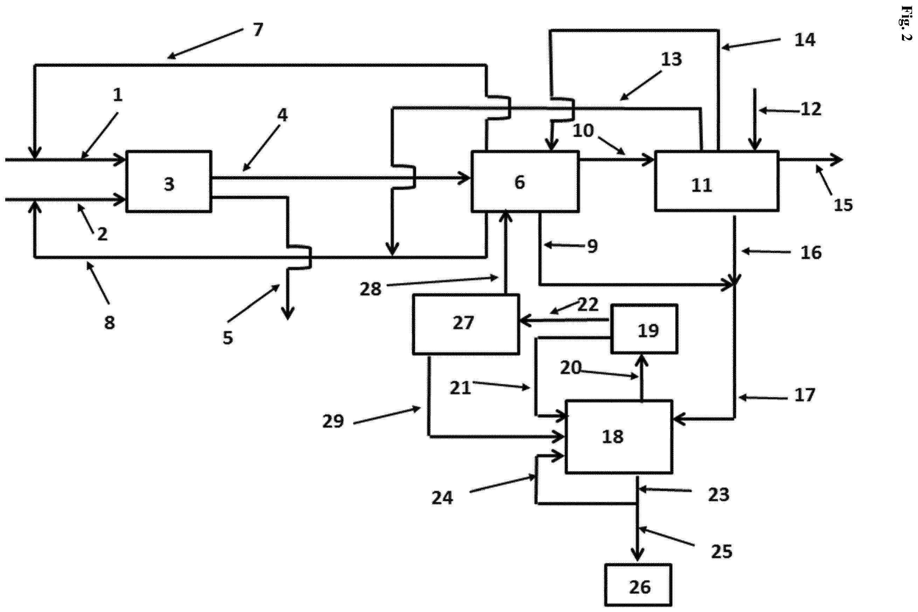

Die Erfindung kann auch an dem in Figur 2 dargestellten Diagramm erläutert werden, ohne dass die Erfindung darauf eingeschränkt werden soll:
- 1: Strom eines in einem organischen Lösungsmittel gelösten Carbonylhalogenids;
- 2: Strom eines Monophenols, das in einer ein Alkalihydroxid enthaltenden wässrigen Phase gelöst ist;
- 3: Vorrichtung zur Umsetzung des in der wässrigen alkalischen Phase gelösten Monophenols mit dem in dem organischen Lösungsmittel gelösten Carbonylhalogenid zu einem in dem organischen Lösungsmittel gelösten Diarylcarbonat;
- 4: Strom von Diarylcarbonat, Verunreinigungen, organischem Lösungsmittel und nicht umgesetztem Monophenol;
- 5: Strom von Alkalichlorid in wässriger Phase;
- 6: Vorrichtung, in der organisches Lösungsmittel, ein größerer Teil des nicht umgesetzten Monophenols, ein größerer Teil des Diphenylcarbonats enthaltend einen kleineren Teil der Verunreinigungen und ein größerer Teil der Verunreinigungen enthaltend einen kleineren Teil des Diarylcarbonats und einen kleineren Teil des nicht umgesetzten Monophenols voneinander getrennt werden;
- 7: Strom des organischen Lösungsmittels;
- 8: Strom des größeren Teils des nicht umgesetzten Monophenols;
- 9: Strom des größeren Teils der Verunreinigungen enthaltend einen kleineren Teil des Diarylcarbonats und einen kleineren Teil des nicht umgesetzten Monophenols;
- 10: Strom des größeren Teils des Diarylcarbonats enthaltend einen kleineren Teil der Verunreinigungen;
- 11: Vorrichtung zur Umsetzung eines Diarylcarbonats mit einem Diphenol zu einem Oligocarbonat und weiter zu einem Polycarbonat;
- 12: Strom eines Diphenols;
- 13: Strom des größeren Teils des Monophenols, das bei der Umsetzung des Diarylcarbonats mit einem Diphenol zu einem Oligocarbonat und weiter zu einem Polycarbonat entstanden ist;
- 14: Strom des größeren Teils des bei der Umsetzung des Diarylcarbonats mit einem Diphenol zu einem Oligocarbonat und weiter zu einem Polycarbonat nicht umgesetzten Diarylcarbonats;
- 15: Strom des Polycarbonats als Endprodukt;
- 16: Strom von nicht umgesetztem Diarylcarbonat, nicht umgesetztem Oligocarbonat, des kleineren Teils des Monophenols, das bei der Diarylcarbonats mit einem Diphenyl zu einem Oligocarbonat und weiter zu einem Polycarbonat entstanden ist, und der Verunreinigungen aus Strom (10);
- 17: Strom, entstanden aus der Vereinigung der Ströme (9) und (16);
- 18: erste Reinigungskolonne;
- 19: Kühler;
- 20: Strom des Rein-Gemischs;
- 21: Strom des größeren Teils des Rein-Gemischs;
- 22: Strom des kleineren Teils des Rein-Gemischs;
- 23: Strom des Reste-Gemischs
- 24: Strom des größeren Teils des Reste-Gemischs;
- 25: Strom des kleineren Teils des Reste-Gemischs;
- 26: Vorrichtung zur Entsorgung;
- 27: zweite Reinigungskolonne;
- 28: Strom eines Gemischs enthaltend einen höheren Anteil an Diphenylcarbonat als das Rein-Gemisch;
- 29: Strom eines Gemischs enthaltend einen geringeren Anteil an Diphenylcarbonat als das Rein-Gemisch.

Die Vorrichtungen (3), (6), (11), (16), (19), (26) und (27) können unabhängig voneinander jeweils aus einer Einzelvorrichtung oder mehreren miteinander verbundenen Vorrichtungen bestehen.

## Patentansprüche

1. Verfahren zur Herstellung eines Polycarbonats nach dem Schmelzumesterungsverfahren in Gegenwart von Katalysatoren, wobei das Verfahren wenigstens folgende Schritte umfasst:
(a) Lösen eines Monophenols in einer wässrigen ein Alkalihydroxid enthaltenden Phase und Lösen eines Carbonylhalogenids in einem organischen Lösungsmittel,
(b) Umsetzung des in der wässrigen alkalischen Phase gelösten Monophenols mit dem in dem organischen Lösungsmittel gelösten Carbonylhalogenid zu einem in dem organischen Lösungsmittel gelösten Diarylcarbonat unter Bildung von Schritt-(b)-Verunreinigungen, wobei ein Alkalihalogenid gebildet und anschließend mit der wässrigen Phase abgetrennt wird,
(c) mehrstufiges Abtrennen sowohl des organischen Lösungsmittels, als auch nicht umgesetzten Monophenols als auch eines größeren Teils der Schritt-(b)-Verunreinigungen von einem größeren Teil des Diarylcarbonats und von einem kleineren Teil der Schritt-(b)-Verunreinigungen und gemeinsames Zuführung diesen größeren Teils des Diarylcarbonats und dieses kleineren Teil der Schritt-(b)-Verunreinigungen zu Schritt (d), Rückführung des organischen Lösungsmittels zu Schritt (a) und Rückführung eines größeren Teils des nicht umgesetzten Monophenols zu Schritt (a), wobei der abgetrennte größere Teil der Schritt-(b)-Verunreinigung einen kleineren Teil des Diarylcarbonats und einen kleineren Teil des nicht umgesetzten Monophenols enthält, und Zuführen des größeren Teil der Schritt-(b)-Verunreinigungen zu Schritt (e);
(d) Umsetzung des größeren Teils des Diarylcarbonats aus Schritt (c) mit einem Diphenol oder mehreren Diphenolen zu einem Oligocarbonat und einem Monophenol unter Bildung von Schritt-(d)-Verunreinigungen, und Weiterverarbeitung des Oligocarbonats zu einem Polycarbonat, Abtrennung des Polycarbonats von Monophenol aus Schritt (d), von nicht umgesetztem Diarylcarbonat, von nicht umgesetztem Oligocarbonat, von dem kleineren Teil der Schritt-(b)-Verunreinigungen und von Schritt-(d)-Verunreinigungen, die einen kleineren Teils des in Schritt (d) gebildeten Monophenols enthalten, und Aufreinigung des abgetrennten Polycarbonats als Endprodukt, sowie Rückführung eines größeren Teils des in Schritt (d) gebildeten Monophenols zu Schritt (a), und Abtrennung und Rückführung eines größeren Teils des in Schritt (d) nicht umgesetzten Diarylcarbonats zu Schritt (c) und Zuführen des kleineren Teils des nicht umgesetzten Diarylcarbonats, des nicht umgesetztem Oligocarbonats, des kleineren Teil der Schritt-(b)-Verunreinigungen und der Schritt-(d)-Verunreinigungen enthaltend einen kleineren Teils des in Schritt (d) gebildeten Monophenols zu Schritt (e),
(e) Vereinigung des in Schritt (c) abgetrennten größeren Teils der Schritt-(b)-Verunreinigungen und des darin enthaltenen kleineren Teils des Diarylcarbonats und des kleineren Teils des Monophenols, des kleineren Teils des in Schritt (d) nicht umgesetzten Diarylcarbonats, des in Schritt (d) nicht umgesetzten Oligocarbonats, des kleineren Teil der Schritt-(b)-Verunreinigungen und der Schritt-(d)-Verunreinigungen zu einem Unrein-Gemisch und Zuführung dieses Unrein-Gemischs zu einer Reinigungskolonne in Schritt (f),
(f) wobei in dieser Reinigungskolonne das Unrein-Gemisch derart aufgetrennt wird, dass aus dem Sumpf dieser Reinigungskolonne ein Strom eines Reste-Gemischs enthaltend einen kleineren Teil des der Reinigungskolonne zugeführten Diarylcarbonats und einen ersten Teil der der Reinigungskolonne aus Schritt (e) zugeführten Schritt-(b)-Verunreinigungen, enthaltend einen kleineren Teils des nicht umgesetzten Monophenols, und Schritt-(d)-Verunreinigungen enthaltend einen kleineren Teils des in Schritt (d) gebildeten Monophenols, und einen ersten Teil des der Reinigungskolonne aus Schritt (e) zugeführten, nicht umgesetzten Oligocarbonats abgeführt wird
und ein größerer Teil dieses Reste-Gemischs wieder der Reinigungskolonne als Seitenstrom zugeführt wird und ein kleinerer Teil dieses Reste-Gemischs einer Entsorgung zugeführt wird, und
wobei aus dem Kopf dieser Reinigungskolonne ein Strom eines Rein-Gemischs enthaltend einen größeren Teil des der Reinigungskolonne zugeführten Diarylcarbonats und enthaltend einen zweiten Teil der der Reinigungskolonne aus Schritt (e) zugeführten Schritt-(b)-Verunreinigungen, enthaltend einen kleineren Teils des nicht umgesetzten Monophenols, und Schritt-(d)-Verunreinigungen enthaltend einen kleineren Teils des in Schritt (d) gebildeten Monophenols, und enthaltend einen zweiten Teil des der Reinigungskolonne aus Schritt (e) zugeführten nicht umgesetzten Oligocarbonats abgeführt und dieses Rein-Gemisch einem Kühler zugeführt wird und anschließend von diesem Kühler ein größer Teil dieses Rein-Gemischs wieder zum Kopf der Reinigungskolonne zurück geführt wird ein und ein kleinerer Teil dieses Rein-Gemischs
(g) entweder
(i) wieder Schritt (c) zugeführt wird,
oder
(ii) mindestens einer weiteren Kolonne zugeführt wird, wobei dieser kleinere Teil des Rein-Gemischs in ein Gemisch enthaltend einen höheren Anteil an Diphenylcarbonat als das Rein-Gemisch und mindestens ein Gemisch enthaltend einen geringeren Anteil an Diphenylcarbonat als das Rein-Gemisch aufgetrennt wird, und das Gemisch enthaltend einen höheren Anteil an Diphenylcarbonat als das Rein-Gemisch wieder Schritt (c) zugeführt wird und das mindestens eine Gemisch enthaltend einen geringeren Anteil an Diphenylcarbonat als das Rein-Gemisch - ggf. nach mindestens einer weiteren Reinigung - wieder Schritt (f) zugeführt wird.

2. Verfahren nach Anspruch 1, wobei das Monophenol Phenol ist.

3. Verfahren nach Anspruch 1, wobei das Alkalihalogenid Natriumchlorid ist.

4. Verfahren nach Anspruch 1, wobei das Carbonylhalogenid Phosgen ist.

5. Verfahren nach Anspruch 1, wobei das Diarylcarbonat Diphenylcarbonat ist.

6. Verfahren nach Anspruch 1, wobei das Diphenol ausgewählt ist aus einer oder mehreren der Verbindungen der Gruppe umfassend 4,4'-Dihydroxydiphenyl, 1,1-bis(4-hydroxyphenyl)phenylethan, 2,2-Bis(4-hydroxyphenyl)propan (BPA), 2,2-Bis(3,5-dimethyl-4-hydroxyphenyl)propan, 1,1-Bis(4-hydroxyphenyl)cyclohexane oder 1,1-Bis(4-hydroxyphenyl)-3,3,5-trimethylcyclohexane (TMC), oder eines der Diphenole der Formeln (III) bis (V), 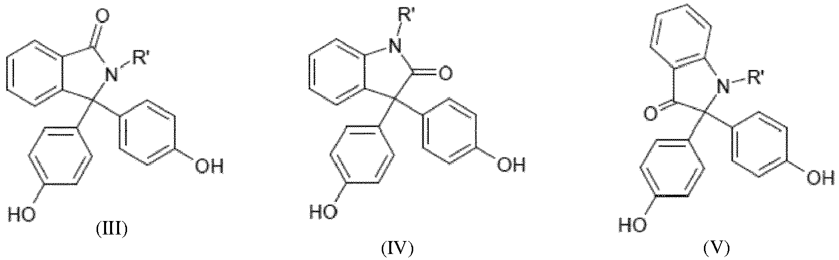 wobei R' jeweils C₁-C₄-Alkyl, Aralkyl oder Aryl bedeutet, bevorzugt Methyl oder Phenyl bedeutet.

7. Verfahren nach Anspruch 1, wobei in Schritt (f) die Sumpftemperatur 240 bis 300 °C, bevorzugt 260 bis 280 °C beträgt.

8. Verfahren nach Anspruch 1, wobei in Schritt (f) der Druck im Kopf 10 bis 30 mbara, bevorzugt 15 bis 25 mbara beträgt.

9. Verfahren nach Anspruch 1, wobei der größere Teil des Rein-Gemischs, der in Schritt (f) wieder zum Kopf der Reinigungskolonne zurück geführt wird, 51 bis 80 % beträgt, und der kleinere Teil dieses Rein-Gemischs, der Schritt (g) zugeführt wird, 49 bis 20 % beträgt.

10. Verfahren nach Anspruch 1, wobei in Schritt (f) der Gehalt von Diarylcarbonat im Reste-Gemisch, das einer Entsorgung zugeführt ist, von 5 bis 25 Gew.-%, bevorzugt von 10 bis 20 Gew.-% beträgt.

11. Verfahren nach Anspruch 1, wobei der Gehalt an Diarylcarbonat im Reste-Gemisch, das einer Resteentsorgung geführt ist, von 1 bis 15 Gew.-%, bevorzugt von 4 bis 10 Gew.-% beträgt.
